# FASCICULE DE BREVET EUROPEEN

(11) **EP 3 083 132 B1**
(45) Date de publication et mention de la délivrance du brevet: **31.10.2018**
(21) Numéro de dépôt: 14827811.2
(22) Date de dépôt: 09.12.2014
(51) Int. Cl.: B23P 15/02, B22D 13/00

(54) **PROCÉDÉ DE FABRICATION DE PIÈCES DE TURBOMACHINE, ÉBAUCHE ET MOULE OBTENUS**
VERFAHREN ZUR HERSTELLUNG VON TURBINENTRIEBWERKTEILEN SOWIE DARAUS RESULTIERENDER ROHLING UND FORM
METHOD FOR PRODUCING TURBINE ENGINE PARTS, AND RESULTING BLANK AND MOULD

(30) Priorité: 20.12.2013 FR 1363347
(43) Date de publication de la demande: 26.10.2016
(73) Titulaire: Safran Aircraft Engines, 75015 Paris (FR)
(72) Inventeur: HUCHIN, Patrick, Emilien, Paul, Emile, F-77550 Moissy Cramayel Cedex (FR); DESCHANDOL, Karine, F-77550 Moissy Cramayel Cedex (FR); DIGARD BROU DE CUISSART, Sébastien, F-77550 Moissy Cramayel Cedex (FR); FARGEAS, Serge, F-77550 Moissy Cramayel Cedex (FR); SOISSON, Marc, F-77550 Moissy Cramayel Cedex (FR); TEXIER, Anthony, F-77550 Moissy Cramayel Cedex (FR); PIATON, Valéry, F-77550 Moissy Cramayel Cedex (FR)
(74) Mandataire: Pichat, Thierry
(86) Numéro de dépôt international: PCT/FR2014/053240
(87) Numéro de publication internationale: WO 2015/092218

(56) Documents cités:
- EP-A1- 2 067 546
- EP-A1- 2 223 755
- WO-A1-2008/125129
- WO-A1-2014/072661
- GB-A- 2 290 998
- JP-A- 2006 336 059

## Description

La présente invention concerne un procédé de fabrication de pièces métalliques de turbomachine, et en particulier d'aubes de roue de turbine d'un turboréacteur ou d'un turbopropulseur d'avion.

La présente invention concerne aussi une ébauche obtenue à l'issue du moulage selon l'étape a) de la revendication 1 et un moule pour la mise en oeuvre du procédé de la revendication 1 seule ou en combinaison avec l'une des revendications 2 à 4.

Il est connu, pour fabriquer plusieurs telles pièces, de successivement :
a) couler un alliage métallique dans un moule pour la réalisation d'une ébauche, et
b) usiner l'ébauche pour la réalisation des pièces.

Un tel procédé est décrit dans le document GB 2 290 998 A.

Certaines ébauches cylindriques peuvent présenter des différences de microstructures entre leurs centres respectifs et la périphérie. Cela peut entraîner des différences de microstructure au sein d'une même aube.

C'est notamment le cas des pièces réalisées en alliage métallique à base de TiAI.

Dans la technique actuelle, certaines autres ébauches sont obtenues par fonderie en cire perdue dans un moule en céramique dans lequel est coulé l'alliage métallique. Ce moule est difficile à mettre au point et est à usage unique. De plus, des interactions entre le métal en fusion et la céramique peuvent générer des défauts de fonderie à la surface des ébauches, et la cire perdue peut provoquer des défauts géométriques dans les ébauches si elle est de mauvaise qualité.

Par ailleurs, usiner plusieurs pièces dans une ébauche pose des difficultés de positionnement des pièces dans l'ébauche. Il faut que la position des pièces soit compatible avec les règles métiers de fonderie, d'usinage et du métier auquel les pièces sont destinées.

La présente invention permet de remédier à au moins une partie des inconvénients précités de façon simple, efficace et économique.

La solution est présentée dans les revendications indépendantes.
Les modes de réalisation préférés sont présentés dans les revendications dépendantes. La solution ici proposée consiste en ce que l'ébauche obtenue par coulée soit pleine, polyédrique et présente deux côtés opposés, chacun de forme générale trapézoïdale, les pièces étant ensuite usinées dans une telle ébauche.

Pour parvenir à la solution ici proposée, il a fallu mobiliser des savoir-faire en provenance de divers champs de compétence (fonderie, usinage). Les formes d'ébauches et de cavités de moulage qui en ont résulté ont une morphologie pertinente.

Concernant le moule utilisé, on conseille qu'il comprenne au moins une cavité de moulage polyédrique, présentant deux côtés opposés, chacun de forme générale trapézoïdale, adaptée au moulage de ladite ébauche.

De préférence, il s'agira d'un moule rotatif pour le moulage simultané de plusieurs ébauches par centrifugation. Le moule sera alors lié à des moyens de mise en rotation autour d'un axe central de rotation et comprendra plusieurs cavités de moulage s'étendant radialement autour dudit axe central.

Cette technologie permet de réaliser des ébauches en TiAl, en particulier pour des aubes de turbomachine.

Dans ce domaine des turbomachines, le procédé selon l'invention auquel le moule est destiné s'applique ainsi bien au moulage d'aubes, à savoir des pièces présentent chacune un axe longitudinal et, le long de cet axe, un pied à une première extrémité, un talon à une seconde extrémité, et une pale à section incurvée qui s'étend entre elles.

Selon l'invention, pour que chaque ébauche tende vers une intégration d'une partie au moins des contraintes de remplissage, de solidification, de démoulage, de découpe des ébauches, d'usinage des pièces afin que celles-ci soient conformes aux caractéristiques attendues :
- l'ébauche est adaptée à contenir entièrement au moins deux aubes identiques, situées côte-à-côte, à plat, à distance l'une de l'autre, avec chacune leur axe longitudinal passant par les deux côtés latéraux opposés de l'ébauche qui sont respectivement limités latéralement par les grandes et petites bases des côtés de forme générale trapézoïdale,
- et on usine ensuite ainsi lesdites aubes dans l'ébauche de manière qu'elles y soient toutes identiquement orientées.

Pour optimiser le moulage, les deux côtés opposés de plus grandes surfaces du moule selon l'invention sont inscrits dans un angle compris entre 2° et 10°, et de préférence entre 3° et 8°.

Par ailleurs, il est conseillé que, pour des aubes, l'obtention de l'ébauche considérée passe, lors de l'étape a), par un moulage de façon que les deux côtés opposés chacun de forme générale trapézoïdale soient sensiblement parallèles et formés chacun d'une seule face sensiblement plane.

Le moule, qui est par exemple un moule permanent, et dans lequel est coulé l'alliage sera de préférence métallique, ce qui permettra de limiter la contamination du matériau des ébauches par celui du moule.

Concernant les ébauches, et dans le but d'une optimisation d'usinage des pièces moulées, la solution selon l'invention consiste en ce que lesdites pièces sont usinées toutes identiquement orientées dans l'ébauche, les deux côtés opposés de plus grandes surfaces de l'ébauche étant alors inscrits dans un angle compris entre 2° et 10°, et de préférence entre 3° et 8°.

Dans ce cas, il est conseillé que chaque ébauche présente en outre deux côtés latéraux opposés de surfaces inégales et parallèles ayant chacune une hauteur limitée par les deux dits côtés de plus grandes surfaces, lesdites hauteurs étant chacune comprise entre 20mm et 500mm.

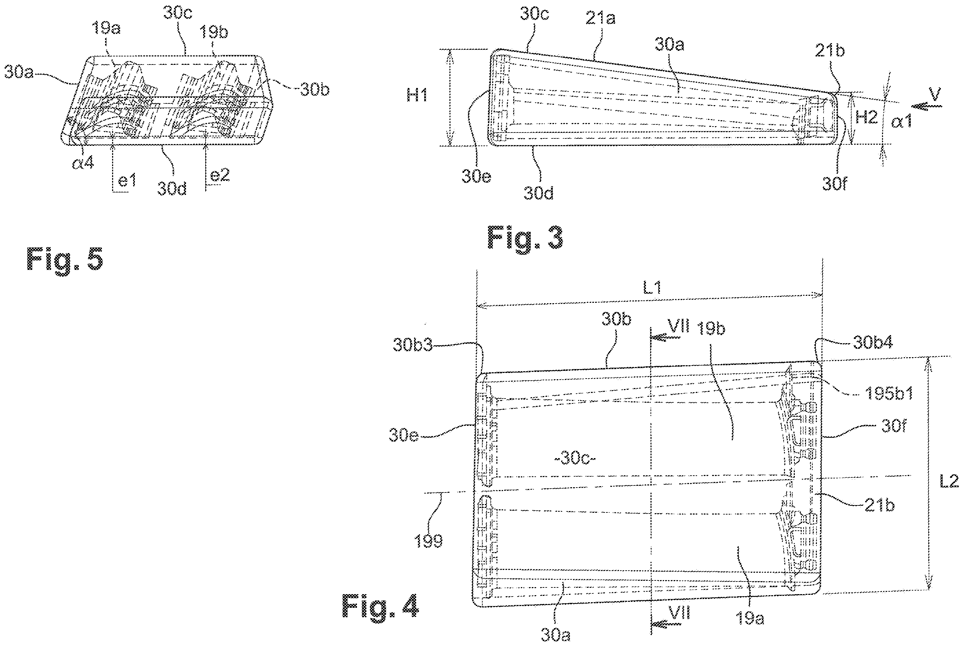

D'autres avantages et caractéristiques de l'invention apparaîtront à la lecture de la description suivante faite à titre d'exemple non limitatif et en référence aux dessins annexés où les figures 3 à 5 sont précises dimensionnellement et correspondent à une réalité industrielle, à l'image de plans côtés, et dans lesquels :
- la figure 1 schématise un dispositif de fabrication d'ébauches ou barreaux, par moulage,
- la figure 2 est une vue schématique en perspective d'une première réalisation possible d'une ébauche moulée, obtenue par exemple par le dispositif de moulage de la figure 1,
- les figures 3,4,5 sont des vues d'une variante de l'ébauche moulée de la figure 2, respectivement suivant un premier côté, de dessus, et suivant un second côté (flèche V),
- la figure 6 schématise une partie de moule, avec sa cavité de moulage de l'ébauche de la figure 2, et
- la figure 7 représente une coupe transversale de l'ébauche selon la ligne VII-VII de la figure 4.

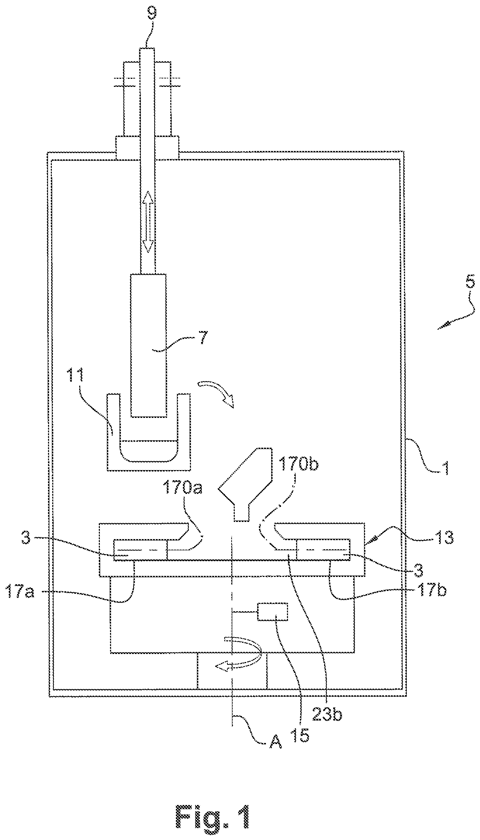

Ainsi, on voit figure 1 un dispositif 1 de fabrication d'ébauches ou barreaux 3, par des opérations successives de fonte, coulée et moulage.

Le dispositif 1 comprend une enceinte 5 fermée et étanche dans laquelle est appliqué un vide partiel. Un lingot 7 en alliage métallique, à base de TiAl par exemple, est fixé à une extrémité d'une électrode 9 qui est reliée à une borne d'une source de courant dont l'autre borne est reliée à un creuset 11 logé dans l'enceinte 5. Lorsque le lingot 7 se rapproche du creuset 11, des arcs électriques se forment entre le creuset et le lingot ce qui provoque la fusion du lingot qui tombe alors au fond du creuset (VSM : Vacuum Skull Melting). Lorsque le lingot est complètement fondu dans le creuset l'alliage métallique est versé dans un moule 13, de préférence métallique et permanent.

Ce moule 13 permet de couler l'alliage par centrifugation. Pour cela, le moule est mis en rotation autour d'un axe A par l'intermédiaire d'un moteur 15.

Le moule comprend plusieurs logements ou cavités, telles ici 17a, 17b, qui s'étendent radialement autour de l'axe A qui est ici vertical. On conseille qu'elles soient régulièrement espacés autour de cet axe. L'alliage à couler est apporté vers le centre du moule et la rotation du moule le répartit vers les cavités.

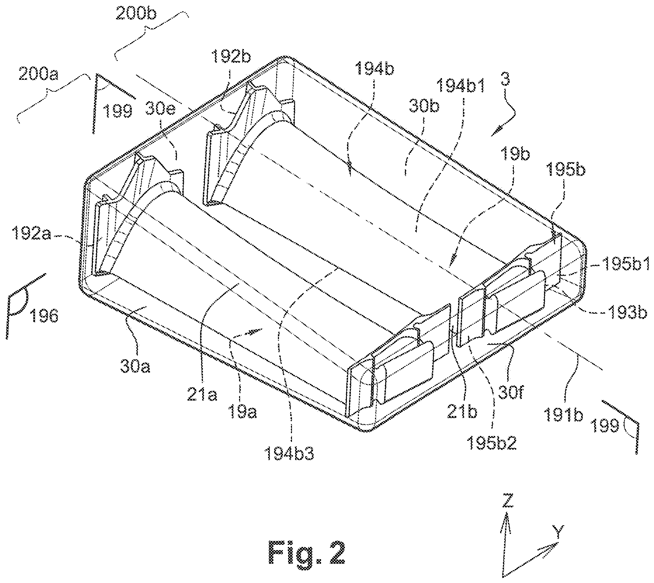

De préférence, l'axe A sera sensiblement vertical et celui (tels ici 170a, 170b) de chaque cavité sera sensiblement horizontal. Sur la figure 1, les cavités, telles 17a, 17b, de moulage n'ont toutefois pas été représentées avec leur(s) forme(s) optimisée(s), notamment pour convenir au moulage d'une ébauche 3 conforme à celle des figures 2 à 5.

Les forces centrifuges générées par la rotation du moule forcent l'alliage en fusion à pénétrer dans ces cavités et à les remplir.

Après refroidissement, le moule 13 est démonté et les pièces moulées sont extraites.

On aura compris que la formes des cavités 17a,17b... correspondra à celle des pièces. Ce qui suit concernant les pièces ou ébauches s'applique donc aussi aux cavités du moule.

Sur la figure 2, qui montre une forme générale d'ébauche moulée conforme à la solution ici proposée, et qui peut être l'une de celles référencées 3 ci-avant, on note d'emblée que le barreau ou ébauche 3 est totalement plein, polyédrique et présente deux côtés opposés 30a,30b de forme générale trapézoïdale. L'ébauche est un hexaèdre. Elle présente une forme générale de prisme à base trapézoïdale. Le prisme est droit. Il pourrait être oblique.

C'est dans une telle ébauche, considérée dans son état solide, que les pièces telles 19a,19b, ici deux aubes de turbomachine, seront usinées, le moment venu.

Sur les figures 2-5, la configuration des deux côtés opposés 30a,30b de forme générale trapézoïdale a été optimisée.

Selon l'invention l'ébauche 3 pour des aubes, celle-ci, une fois moulée :
- sera un hexaédre,
- avec les deux côtés opposée 30a,30b formés chacun d'une seule face sensiblement plane, lesdites faces étant sensiblement parallèles entre elles..

La base de côté 30a forme un angle α4 de 60° à 80° avec les plus grandes faces 30c,30d, lesquelles sont de préférence planes et sensiblement parallèles entre elles.

Pour obtenir un remplissage du moule et une solidification adéquats, un positionnement, dans l'ébauche, des pièces telles 19a,19b sans imbrication, autorisant une première découpe simple et un volume hors tout de cette ébauche défini afin de minimiser les temps d'usinage, la solution selon l'invention consiste, comme on le voit aussi sur les figures 2-5 en ce que :
- lesdites pièces sont usinées dans l'ébauche toutes identiquement orientées,
- les deux côtés latéraux opposés de plus grandes surfaces, 30c,30d, de l'ébauche sont inscrits dans un angle α1 compris entre 2° et 10°, et de préférence entre 3° et 8°.

Ainsi, avant d'usiner les pièces, telles 19a,19b, côte-à-côte, légèrement distantes l'une de l'autre, on pourra de préférence découper l'ébauche suivant un trait très simple, tel suivant un plan 199 (figure 2) :
- passant entre deux volumes, tels 200a,200b, de l'ébauche chacun adapté à contenir entièrement au moins une desdites pièces,
- et qui coupera les deux côtés opposés de plus grandes surfaces 30c,30d de l'ébauche et deux autres côtés latéraux opposés, ici 30e,30f.

Plus nettement sur la figure 2, on remarque que si les pièces à usiner sont des aubes, chacune (par exemple celle référencée 19b) présentera un axe longitudinal 191b et, le long de cet axe, un pied 193b adjacent à une plate-forme intérieure 195b, à une première extrémité, un talon (ou plate-forme extérieure) 192b à une seconde extrémité, et une pale 194b à section incurvée qui s'étend entre les plateformes. L'axe longitudinal 191b pourra passer par le centre géométrique du pied et du talon.

Dans ce cas, on préfèrera que les talons, ici 192a,192b, des aubes soient alignés, les aubes étant, dans le cas préféré ici présenté et au moment de leur usinage dans l'ébauche, identiques et identiquement orientées dans l'espace. La géométrie présentée ci-avant le permet.

Ainsi, ces talons les surfaces planes respectives des talons, ici 192a,192b, seront, comme illustré, alignés entre eux et s'étendront donc tous suivant un même plan 196 parallèle au côté (face plane) 30e à proximité immédiate duquel leur usinage sera réalisé.

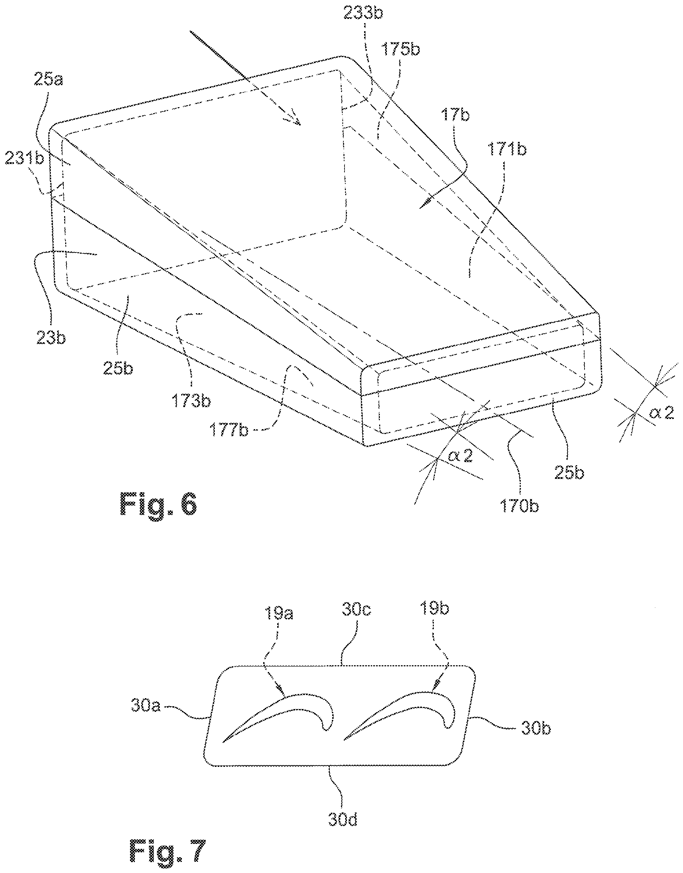

En particulier, les pales (telle celle 194b ; figure 2) des aubes seront par ailleurs chacune avantageusement prévues pour être usinées avec leur face convexe (telle 194b1 sur la figure 2) orientée en direction de la face 30c, la face opposée concave étant donc alors orientée en direction de la face 30d, comme illustré figure 7.

On remarquera que les pièces 19a,19b sont prévues pour être usinées à plat, disposées sensiblement horizontalement. L'ébauche 3 est donc plus large (figure 2 ; direction Y perpendiculaire à l'axe 191b d'allongement des aubes) que haute (direction verticale Z perpendiculaire à Y).

Figures 2,4 et 7, la partie amont (telle 195b1 pour l'aube 19b) de chaque plate-forme intérieure, telle 195b pour la même aube, est dirigée vers le côté 30b. On aura compris que cette partie amont de plate-forme intérieure est celle qui est la plus proche du bord d'attaque de la pale, tandis que la partie aval de ladite plate-forme (telle 195b2 pour l'aube 19b) est celle qui est la plus proche du bord de fuite (194b3 pour la pale194b).

De manière comparable, la profondeur (telle e1,e2) vis-à-vis de la face 30d où les aubes seront usinées en alignement dans l'ébauche, sera la même, et évoluera de même manière, pour chacune de ces pièces. Ainsi, on utilisera au mieux l'ébauche.

Dans le cas préféré illustré :
- les deux côtés latéraux 30e,30f, (de préférence parallèles entre eux), sont perpendiculaires à l'un des deux côtés latéraux opposés de plus grandes surfaces, ici le côté 30d,
- deux bords opposés de chacun de ces deux côtés latéraux 30e,30f définissent, par paire, les deux petites bases et les deux grandes bases des côtés trapézoïdaux opposés 30a,30b, respectivement.

Par ailleurs, la solution préférée illustrée et recommandée est telle que, pour une maitrise optimisée du volume hors tout, eu égard aux aubes en cause, les deux côtés opposés 30a,30b de forme générale trapézoïdale sont chacune non perpendiculaires (de 2° à 5° typiquement) vis-à-vis des côtés latéraux 30e,30f.

Toujours pour un usinage optimisé, en termes de qualité de pièces finies et de consommation de matière, de plusieurs aubes identiques dans une même ébauche 3, cette dernière sera de préférence un hexaèdre, comme illustré sur les figures 1-5.

Sur la figure 3, on voit aussi qu'au moins pour permettre d'usiner dans l'ébauche tout type d'aube actuellement conçu, il est conseillé que les deux côtés latéraux opposés 30e,30f :
- soient de surfaces inégales et parallèles entre eux,
- aient chacun une hauteur respectivement H1 et H2 (figure 3), différente de celle de l'autre,
- soient limités par lesdits deux côtés de plus grandes surfaces, 30c,30d,
- et aient des hauteurs respectivement H1 et H2 chacune comprise entre 20mm et 500mm.

Un angle de 0.1° pourra exister entre les côtés globalement trapézoïdaux 30a,30b, ce qui les configurent sensiblement parallèlement.

Si, comme préféré, les ébauches sont coulées par centrifugation dans un moule rotatif, tel le moule 13, on utilisera de préférence un moule à coquilles.

Compte tenu de ce qui a été indiqué concernant l'ébauche 3, sa cavité de moulage, notamment s'il s'agit de l'une de celle de la figure 1, comme par exemple celle référencée 17b, il est recommandé ce qui suit, comme illustré figure 6 où, par souci de simplification, l'ébauche à mouler est supposée celle de la figure 2 :
- la/chaque cavité de moulage, telle 17a ou 17b, est un polyèdre et présente deux côtés opposés 171b, 173b chacune de forme générale trapézoïdale adaptée au moulage de ladite ébauche pleine,
- dans le cas où plusieurs aubes toutes identiquement orientées dans le bloc seront à usiner dans l'ébauche moulée, les deux côtés opposés 175b,177b de plus grandes surfaces du moule selon l'invention sont inscrits dans un angle α2 compris entre 2° et 10°, et de préférence entre 3° et 8°,
- l'ouverture d'accès à la (chaque) cavité, ici référencée 23b, est située sur le côté latéral dressé de cette cavité dont des côtés opposés dressés 231b,233b sont les grandes bases des côtés opposés 171b,173b de forme générale trapézoïdale,
- l'enveloppe de moulage comprend (au moins) deux coquilles 25a,25b, chacune incorporant une partie de la cavité de moulage concernée, ici 17b.

C'est dans ce cas à l'endroit, ou en face, de l'ouverture 23b que sera moulée la face 30e de l'ébauche, et c'est par l'ouverture 23b que l'alliage métallique entrera dans la cavité (voir flèche figure 6), voire que l'ébauche moulée, durcie, 3 pourrait en sortir ; toutefois, avec des coquilles 25a,25b séparables on pourra permettre un démoulage plus simple de l'ébauche.

Dans un exemple particulier de réalisation, chaque ébauche pourra avoir une longueur L1, entre les côtés 30e,30f comprise entre 160 et 220cm, et une longueur L2 entre les côtés de base 30a,30b fonction du nombres de pièces, identiques et identiquement orientées dans l'ébauche, à y usiner.

Pour deux aubes comme illustré figures 3-5, la longueur L2, pourra être comprise entre 100 et 140cm. La hauteur H1 et H2 pourra alors être comprise entre 40 et 60cm.

On aura compris de ce qui précède que plus de deux pièces pourraient être usiner dans une seule ébauche 3, en particulier plus de deux aubes identiques 19a,19b uniquement en allongeant la longueur L2.

Toutes les pièces devraient avoir le même volume et la même masse.

## Revendications

1. Procédé de fabrication de plusieurs pièces (19a,19b) métalliques de turbomachine, les pièces (19a,19b) étant des aubes présentant chacune un axe longitudinal (191b) et, le long de cet axe, un pied (193b) à une première extrémité, un talon (192b) à une seconde extrémité, et une pale (194b) à section incurvée s'étendant entre lesdites première et seconde extrémités, le procédé comprenant des étapes dans lesquelles :
a) on coule un alliage métallique dans un moule (13) pour la réalisation d'une ébauche (3), et
b) on usine l'ébauche pour la réalisation des pièces, l'ébauche obtenue par coulée étant pleine, polyédrique et présentant deux côtés opposés (30a,30b), chacun de forme générale trapézoïdale où chaque côté opposé (30a,30b) comprend donc uniquement deux bords parallèles, l'ébauche (3) étant adaptée à contenir entièrement au moins deux aubes identiques et situées côte-à-côte, à distance l'une de l'autre, lesdites aubes étant usinées dans l'ébauche de manière qu'elles y soient toutes identiquement orientées,
**caractérisé en ce que**, de manière que lesdites aubes puissent être usinées toutes identiquement orientées dans l'ébauche coulée, les deux côtés opposés (30c,30d) de plus grandes surfaces de l'ébauche sont inscrits dans un angle (α1) compris entre 2° et 10°.

2. Procédé selon la revendication 1, **caractérisé en ce que**, lors de l'étape a), on moule l'ébauche de façon que les deux côtés opposés (30a,30b) de forme générale trapézoïdale soient sensiblement parallèles et formés chacun d'une seule face sensiblement plane.

3. Procédé selon la revendication 1 ou 2, **caractérisé en ce que** lors du moulage, on moule l'ébauche de manière que les talons (192a,192b) des aubes soient alignés suivant un plan (196) parallèle à une face latérale de l'ébauche (30e) autre :
- que les deux côtés opposés de plus grandes surfaces (30c,30d) et
- que les côtés (30a,30b) définissant la base trapézoïdale, laquelle comprend donc uniquement deux bords parallèles.

4. Procédé selon l'une des revendications précédentes, **caractérisé en ce qu'**avant d'usiner lesdites pièces, on découpe l'ébauche suivant sensiblement un plan (199) :
- qui passe entre deux volumes (200a,200b) de l'ébauche chacun adapté à contenir entièrement au moins une desdites pièces,
- et qui coupe les deux côtés opposés de plus grandes surfaces de l'ébauche (30c,30d) et deux autres côtés latéraux opposés (30e,30f).

5. Ebauche obtenue à l'issue du moulage selon l'étape a) de la revendication 1, **caractérisée en ce que** les deux côtés opposés de plus grandes surfaces (30c,30d) de l'ébauche sont inscrits dans un angle compris entre 2° et 10°.

6. Ebauche selon la revendication 5, **caractérisée en ce que** les deux côtés opposés (30a,30b) de forme générale trapézoïdale sont sensiblement parallèles et formés chacun d'une seule face sensiblement plane.

7. Ebauche selon la revendication 5 ou 6, **caractérisée en ce qu'**elle présente en outre deux côtés latéraux opposées (30e,30f) de surfaces inégales et parallèles ayant chacune une hauteur (H1 ,H2), différente de celle de l'autre, limitée par lesdits deux côtés de plus grandes surfaces, lesdites hauteurs étant chacune comprises entre 20mm et 500mm.

8. Moule pour la mise en oeuvre du procédé selon la revendication 1 seule ou en combinaison avec l'une des revendications 2 à 4, où les deux côtés opposés (171b, 173b) de plus grandes surfaces du moule sont inscrits dans un angle compris entre 2° et 10°.

9. Moule selon la revendication 8, **caractérisé en ce qu'**il comprend au moins une cavité (17a,17b) de moulage polyédrique présentant deux côtés opposés chacun de forme générale trapézoïdale (171b,173b) où chaque côté opposé (171b,173b) comprend donc uniquement deux bords parallèles, ladite au moins une cavité (17a, 17b) étant adaptée au moulage de l'ébauche pleine.

10. Moule selon la revendication 8, **caractérisé en ce qu'**il s'agit d'un moule rotatif, pour un moulage simultané de plusieurs dites ébauches par centrifugation, le moule étant lié à des moyens de mise en rotation autour d'un axe central de rotation (A) et comprenant plusieurs dites cavités de moulage (17a,17b) qui s'étendent radialement autour dudit axe central (A).

## Patentansprüche

1. Verfahren zur Herstellung mehrerer metallischer Turbomaschinenteile (19a, 19b), wobei die Teile (19a, 19b) Schaufeln sind, die jeweils eine Längsachse (191b) aufweisen und entlang dieser Achse einen Fuß (193b) an einem ersten Ende, einen Absatz (192b) an einem zweiten Ende und zwischen dem ersten und dem zweiten Ende ein Schaufelblatt (194b) mit gekrümmten Abschnitt, wobei das Verfahren Schritte umfasst, in denen:
a) man eine Metalllegierung in eine Form (13) gießt, um einen Rohling (3) herzustellen und
b) man den Rohling zur Herstellung von Teilen bearbeitet, wobei der durch Gießen hergestellte Rohling massiv und polyedrisch ist und zwei gegenüber liegende, im Wesentlichen trapezförmige Seiten (30a, 30b) umfasst, wobei jede gegenüberliegende Seite (30a, 30b) folglich nur zwei parallele Ränder aufweist, wobei der Rohling (3) so gestaltet ist, dass er mindestens zwei identische, nebeneinander befindliche, zueinander beabstandete Schaufeln enthalten kann, wobei besagte Schaufeln mit identischer Ausrichtung in den Rohling gearbeitet werden,
so dass besagte Schaufeln in dem gegossenen Rohling in gleicher Ausrichtung bearbeitet werden können, und die beiden gegenüber liegenden Seiten (30c, 30d) des Rohlings mit den größeren Flächen einen Winkel (α1) zwischen 2° und 10° bilden.

2. Verfahren nach Anspruch 1, **dadurch gekennzeichnet, dass** man den Rohling in Schritt a) so formt, dass die beiden gegenüberliegenden, generell trapezförmigen Seiten (30a, 30b) parallel zueinander verlaufen und jeweils mit einer im Wesentlichen ebenen Seite geformt sind.

3. Verfahren nach Anspruch 1 oder 2, **dadurch gekennzeichnet, dass** man den Rohling während des Formens so gestaltet, dass die Absätze (192a, 192b) der Schaufel auf einer Ebene (196) parallel zu einer Seitenfläche des Rohlings (30e) ausgerichtet sind:
- die nicht eine der beiden gegenüber liegenden, großflächigeren Seiten (30c, 30d) und
- nicht eine der Seiten (30a, 30b) ist, welche die trapezförmige Basis bilden, und folglich nur zwei parallele Ränder umfasst.

4. Verfahren nach einem der vorhergehenden Ansprüche, **dadurch gekennzeichnet, dass** man den Rohling vor dem Bearbeiten der Teile im Wesentlichen in einer Ebene (199) schneidet:
- welche zwischen zwei Volumen (200a, 200b) des Rohlings verläuft, wobei jedes so gestaltet ist, dass es mindestens eines der besagten Teile in vollem Umfang enthalten kann,
- welche die beiden gegenüberliegenden, großflächigeren Seiten (30c, 30d) des Rohlings und zwei andere, gegenüber liegende Seitenflächen (30e, 30f) schneidet.

5. Rohling, der nach dem Formungsverfahren gemäß Schritt a) von Anspruch 1 erzielt wurde, **dadurch gekennzeichnet, dass** die beiden gegenüberliegenden, großflächigeren Seiten (30c, 30d) des Rohlings einen Winkel zwischen 2° und 10° bilden.

6. Rohling nach Anspruch 5, **dadurch gekennzeichnet, dass** die beiden gegenüber liegenden, generell trapezförmigen Seiten (30a, 30b) im Wesentlichen parallel zueinander verlaufen und jeweils mit einer im Wesentlichen ebenen Seite gebildet werden.

7. Rohling nach Anspruch 5 oder 6, **dadurch gekennzeichnet, dass** er des Weiteren zwei gegenüber liegende Seitenflächen (30e, 30f) mit ungleich großen, parallel zueinander verlaufenden Flächen aufweist, die jeweils unterschiedliche Höhen (H1, H2) aufweisen, die durch besagte beiden großflächigeren Seiten begrenzt sind, wobei die Höhen jeweils zwischen 20 mm und 500 mm betragen.

8. Form zur Anwendung des Verfahrens ausschließlich nach Anspruch 1 oder in Kombination mit einem der Ansprüche 2 bis 4, in der die beiden gegenüber liegenden, großflächigeren Seiten (171b, 173b) der Form einen Winkel zwischen 2° und 10° bilden.

9. Form nach Anspruch 8, **dadurch gekennzeichnet, dass** sie mindestens einen polyedrisch Formhohlraum (17a, 17b) mit zwei gegenüber liegenden, generell trapezförmigen Seiten (171b, 173b) aufweist, wobei jede gegenüberliegende Seite (171b, 173b) folglich nur zwei parallele Ränder aufweist, wobei sich mindestens ein Hohlraum (17a, 17b) für das Formen des massiven Rohlings eignet.

10. Form nach Anspruch 8, **dadurch gekennzeichnet, dass** es sich um eine rotierende Form handelt, um mehrere dieser Rohlinge durch Zentrifugierung gleichzeitig formen zu können, wobei die Form mit Mitteln verbunden ist, die deren Rotation um eine zentrale Rotationsachse (A) ermöglichen, und mehrere dieser Formhohlräume (17a, 17b) aufweist, die sich radial um besagte Mittelachse (A) erstrecken.

## Claims

1. A method for producing multiple metal turbine engine parts (19a,19b), being blades each having a longitudinal axis (191b) and, along such axis, a root (193b) at a first end, a heel (192b) at a second end, and a curved section vane (194b), which extends between said first end and said second end, the method comprising steps of:
a) casting a metal alloy in a mould (13) in order to produce a blank (3), and
b) machining the blank in order to produce the parts, the blank obtained by casting is solid polyhedral, and has two opposing sides (30a, 30b), each being generally trapezoidal, where each opposite side (30a, 30b) has thus only two parallel edges, the blank (3) being adapted to totally contain at least two such identical blades, positioned side by side, at a distance from each other, said blades being machined in the blank so that they all have the same orientation,
**characterized in that**, for allowing said blades to be manufactured in the blank all with the same orientation in the cast blank, the two opposing sides (30c, 30d) of larger surfaces of the blank are inscribed in an angle (α1) ranging from 2° to 10°.

2. A method according to claim 1, **characterized in that**, during the step a), the blank is moulded so that the two generally trapezoidal opposing sides (30a, 30b) are substantially parallel and each consist of only one substantially flat face.

3. A method according to claim 1 or 2, **characterized in that**, upon moulding, the blank is moulded so that the heels (192a,192b) of the blades are aligned along a plane (196) parallel to a lateral face of the blank (30e) other:
- than the two opposing sides of the larger surfaces (30c, 30d), and
- than the sides (30a, 30b) defining the trapezoidal base, which has only two parallel edges.

4. A method according to one of the preceding claims, **characterized in that**, prior to machining said parts, the blank is cut substantially along a plane (199):
- which passes between two volumes (200a, 200b) of the blank, each being adapted to totally contain at least one of said parts,
- and which cuts the two opposing sides of the larger surfaces of the blank (30c, 30d) and two other opposing lateral sides (30e, 30f).

5. A blank obtained after moulding according to step a) of claim 1, **characterized in that** the two opposing sides of the larger surfaces (30c, 30d) of the blank are inscribed in an angle ranging from 2° to 10°.

6. A blank according to claim 5, **characterized in that** it the two opposing sides (30a, 30b) having a general trapezoidal shape are substantially parallel and each consisting of only one substantially flat face.

7. A blank according to claim 5 or 6, **characterized in that** it also has two opposing lateral sides (30e, 30f) having unequal and parallel surfaces each having a height (H1, H2), different from the other one, limited by said two sides of the larger surfaces, with said height each ranging from 20mm to 500mm.

8. A mould for implementing the method according to claim 1 alone or combined with one of claims 2 to 4, wherein the two opposing sides (171b, 173b) of the larger surfaces of the mould are inscribed in an angle ranging from 2° to 10°.

9. A mould according to claim 8, **characterized in that** it comprises at least one polyhedral mould cavity (17a,17b) having two opposing sides, each having a general trapezoidal shape (171b,173b), where each opposite side (171b, 173b) has thus only two parallel edges, said at least one cavity being adapted to the moulding of said solid blank.

10. A mould according to claim 8, **characterized in that** the mould can be rotated, for the simultaneous moulding of several blanks by centrifugation, with the mould being connected to means providing rotation about a central axis of rotation (A) and comprising several mould cavities (17a, 17b) radially extending about said central axis (A).
